# EUROPÄISCHE PATENTANMELDUNG

(11) **EP 4 361 904 A1**
(43) Veröffentlichungstag der Anmeldung: **01.05.2024**
(21) Anmeldenummer: 22204311.9
(22) Anmeldetag: 28.10.2022
(51) Int. Cl.: G06N 20/00

(54) **SICHERSTELLUNG VON FUNKTIONALER AI-QUALITÄT**

(71) Anmelder: Siemens Aktiengesellschaft, 80333 München (DE)
(72) Erfinder: Schnitzer, Ronald, 80796 München (DE); Zillner, Sonja, 86911 Diessen am Ammersee (DE); Hapfelmeier, Andreas, 82054 Sauerlach (DE); Müller, Ansgar, 91056 Erlangen (DE)
(74) Vertreter: Siemens Patent Attorneys

(57) **Zusammenfassung**

Die Erfindung betrifft ein Verfahren zur Erhöhung der Qualität eines AI Systems. Es werden AI System spezifische Gefahrenquellen dahingehend untersucht, ob sie für eine bestimmte AI Applikation relevant sind (RELAVANCE), und ob sie für einen bestimmten Abschnitt innerhalb des Lebenszyklus des AI Systems relevant sind (IDENTFIY). Für mindestens eine als relevant für die bestimmte AI Applikation und den bestimmten Abschnitt erkannte Gefahrenquelle wird ein hieraus resultierendes Risiko bestimmt (ESTIMATE), und abhängig von dem Ergebnis des bestimmten Risikos wird ein Verfahren zur Risikoreduktion hinsichtlich der Gefahrenquelle durchgeführt (MITI-GATE) .

## Beschreibung

Die Erfindung betrifft ein Verfahren zur Erhöhung der Qualität eines AI Systems, bei dem AI System spezifische Gefahrenquellen betrachtet werden.

In zunehmendem Maß werden Produkte und Applikationen auf den Markt gebracht, welche sich Künstlicher Intelligenz (AI: Artificial Intelligence) bedienen. AI bringt hierbei bedeutende Verbesserungen gegenüber nicht auf AI basierenden Applikationen hervor. Dies ist in nahezu allen Industrien und Branchen der Fall. Die medizinische Diagnostik ist ein prominentes Beispiel hierfür. Mit dem großen Potential, welches KI Anwendungen, im Folgenden als AI Applikationen bezeichnet, mit sich bringen, gehen jedoch auch neuartige Gefährdungen und Risiken einher. Z.B. können extrem kleine Veränderungen von Pixeln in einem digitalen Bild, welche von dem menschlichen Auge nicht erkennbar sind, dazu führen, dass eine AI eine fehlerhafte Klassifizierung vornimmt und inkonsistente Ergebnisse liefert. Geschieht ein solcher Fehler bei der medizinischen Diagnose, kann dies gravierende negative Konsequenzen haben. Dies zeigt bereits, dass bei AI Applikationen ein Bedarf besteht, Gefahrenquellen, welche durch die spezifischen Eigenschaften der AI hervorgerufen werden, im Rahmen der Risikobehandlung ausreichend zu berücksichtigen. Eine solche Risikobehandlung kann in diesem Kontext eine Risikobeurteilung sowie das Anwenden daraus abgeleiteter Risikominderungsmaßnahmen beinhalten.

AI Systeme sind üblicherweise in eine Umgebung eingebettet, welche als AI Applikation bezeichnet wird. Umgekehrt versteht man unter einer AI Applikation ein Produkt oder eine Lösung, welche sich einer oder mehrerer AI Systeme bedient. Das AI System umfasst ein Modell, welches mit geeigneten Daten trainiert wird, und welches nach erfolgtem Training bzw. Lernen bestimmte Ergebnisse liefert. Z.B. ist Bestandteil einer AI Applikation, welche das autonome Fahren unterstützt, ein AI System zur Fußgängererkennung. Diese AI Applikation kann sich weiterer AI Systeme bedienen, z.B. ein AI System zur Spurerkennung. Man kann Risiken sowohl bei der AI Applikation als auch auf der Ebene der AI Systeme identifizieren. Im Beispiel des autonomen Fahrens könnte ein Risiko auf Ebene der AI Applikation darin bestehen, dass Fußgänger die Straße überqueren oder Straßenmarkierungen schlecht erkennbar sind. Eine potenzielle Gefahrenquelle auf der Ebene des AI Systems hingegen könnte die Unterrepräsentation bestimmter Bedingungen in den Trainingsdaten sein, z.B. von Trainingsdaten mit schlechten Beleuchtungsverhältnissen.

Die Verwendung eines AI Systems in einer AI Applikation geht somit mit bisher nicht relevanten Gefahrenquellen einher. Für diese muss eine Herangehensweise an die Behandlung dieser Gefahrenquellen gefunden werden, da Herangehensweisen, welche von nicht-AI Applikationen bekannt sind, üblicherweise im AI Umfeld nicht zielführend sind. Um die unerwünschte Auswirkung von Gefahrenquellen, welche mit einem AI System einhergehen, einzugrenzen, ist eine systematische Risikobehandlung erstrebenswert. Eine solche Betrachtung von Gefährdungen auf AI System Ebene wird auch von einer sich derzeit in Erarbeitung befindlichen EU-Verordnung "Artifical Intelligence Act" angestrebt. Hierin wird gefordert, dass potenzieller Schaden aufgrund eines AI Systems für die menschliche Gesundheit, Grundrechte und die Sicherheit weitgehend abgemildert wird. Dies bedingt, dass vor dem Auf-den-Markt-Bringen eines AI Systems eine entsprechende Gefährdungsanalyse durchgeführt werden müsste, um eine hohe funktionale Qualität von AI Systemen sicherzustellen. Eine solche hohe funktionale AI-Qualität wäre gegeben, wenn alle AI spezifischen Gefahrenquellen systematisch betrachtet wurden, deren negativen Auswirkungen bewertet sowie gemildert wurden, so dass man darauf aufbauend den Nachweis erbringen kann, dass ein angemessenes Restrisiko / tolerierbares Risiko erreicht wurde.

Der Erfindung liegt die Aufgabe zugrunde, ein Verfahren und eine Vorrichtung zur Erhöhung von funktionaler AI-Qualität für ein AI System aufzuzeigen.

Diese Aufgabe wird durch ein Verfahren mit den Merkmalen des Anspruchs 1 gelöst. Ferner sind Gegenstand der Erfindung eine entsprechende Vorrichtung oder ein System zur Datenverarbeitung, ein entsprechendes Computerprogramm, ein entsprechender computerlesbarer Datenträger, und ein entsprechendes Datenträgersignal. Vorteilhafte Ausgestaltungen und Weiterbildungen sind Gegenstand von Unteransprüchen.

Das erfindungsgemäße Verfahren dient der Erhöhung der Qualität eines AI Systems. Hierzu werden AI System spezifische Gefahrenquellen dahingehend untersucht, ob sie für eine bestimmte AI Applikation relevant sind, und ob sie für einen bestimmten Abschnitt innerhalb des Lebenszyklus des AI Systems relevant sind. Für eine als relevant für die bestimmte AI Applikation und den bestimmten Abschnitt erkannte Gefahrenquelle wird ein hieraus resultierendes Risiko bestimmt. Abhängig von dem Ergebnis des bestimmten Risikos wird ein Verfahren zur Risikoreduktion hinsichtlich der Gefahrenquelle durchgeführt.

Bei dem Verfahren werden AI spezifische Gefahrenquellen betrachtet. Diese können die Ursache von unerwünschten Auswirkungen bei Verwendung des AI Systems sein. Dass sie AI spezifisch sind, bedeutet, dass sie durch Merkmale oder spezifische Eigenschaften von auf künstlicher Intelligenz beruhender Technologie bedingt sind. Hierbei gibt es AI System spezifische Gefahrenquellen, die bei nur bestimmten oder bei allen AI Technologien eine Rolle spielen, und/oder solche, die nur bei bestimmten oder bei allen AI Applikationen eine Rolle spielen, und/oder solche, die nur bei bestimmten oder bei allen Abschnitten innerhalb des Lebenszyklus des AI Systems relevant sind.

Zu Beginn wird daher analysiert, ob Relevanz von AI System spezifischen Gefahrenquellen für eine bestimmte AI Applikation und für einen bestimmten Abschnitt innerhalb des Lebenszyklus des AI Systems zu bejahen ist. Eine Bejahung der Relevanz für eine bestimmte AI Applikation bedeutet hierbei, dass die jeweilige Gefahrenquelle bei Einsatz des AI Systems in der jeweiligen AI Applikation potenziell einen Schaden auslösen kann. Bei der AI Applikation handelt es sich vorzugsweise um diejenige Applikation, innerhalb welcher das AI System eingesetzt werden soll. Eine Bejahung der Relevanz für einen bestimmten Abschnitt innerhalb des Lebenszyklus des AI Systems bedeutet, dass aufgrund der jeweiligen Gefahrenquelle ein potenzieller Schaden in diesem Abschnitt auftreten kann, oder dass in diesem Abschnitt durch die jeweilige Gefahrenquelle die Ursache für das potenzielle spätere Auftreten eines Schadens gesetzt wurde. Der Lebenszyklus eines AI Systems kann an sich auf verschiedene Weise gegliedert, d.h. in verschiedene Abschnitte aufgeteilt werden. Im Rahmen der Erfindung können verschiedenartige Gliederungen zum Einsatz kommen, wobei davon ausgegangen wird, dass jede Gliederung den gesamten Lebenszyklus des AI Systems abdeckt. Hierdurch kann gewährleistet werden, dass durch Anwendung des Verfahrens in Bezug auf alle Abschnitte eine umfassende Betrachtung der Qualität des AI Systems möglich ist.

Eine Gefahrenquelle, für welche eine Relevanz für die bestimmte AI Applikation und den bestimmten Abschnitt positiv festgestellt wurde, wird dann weiter behandelt. Diese Behandlung kann für eine oder mehrere Gefahrenquellen, für welche auf Relevanz befunden wurde, durchgeführt werden. Hierzu wird zunächst ein Risiko bestimmt, welches sich aus der jeweiligen Gefahrenquelle ergibt. Als Verfahren zur Risikobestimmung kommen hierbei an sich verschiedenartige in Betracht; vorzugsweise ist das jeweilige Verfahren an die Art der Gefahrenquelle angepasst. Üblicherweise setzt sich ein Risiko aus der Verknüpfung eines Schadens mit einer für dessen Eintritt bestehenden Wahrscheinlichkeit zusammen. Im Rahmen der Bestimmung des Risikos müssen diese beiden Größen jedoch nicht unbedingt getrennt voneinander ermittelt werden.

Schließlich folgt die Durchführung eines Verfahrens zur Risikoreduktion. Dies wird jedoch nicht in jedem Fall durchgeführt, sondern in Abhängigkeit von dem Ergebnis des bestimmten Risikos. Dies erlaubt es, nur bei einem als hinreichend groß eingestuften Risikos eine Risikoreduktion durchführen zu müssen. Die Art des Verfahrens zur Risikoreduktion hängt von der Gefahrenquelle ab, wobei es möglich ist, dass für mehrere Gefahrenquellen das gleiche Verfahren zur Risikoreduktion einsetzbar ist. Aufgrund der Abhängigkeit von der Art der Gefahrenquelle kann das Risikoreduktionsverfahren an verschiedenen Stellen des AI Systems ansetzen. Zum Beispiel könnte eine Überarbeitung der Trainingsdaten oder eine Änderung im Algorithmus des Lernens erfolgversprechend sein, oder auch eine Filterung der Eingangsdaten im tatsächlichen Betrieb des AI Systems.

Vorteilhaft ist es, wenn das aus der Gefahrenquelle resultierende Risiko bestimmt wird, indem aus einem Speicher ein mit Bezug zu der Gefahrenquelle angegebenes Verfahren zur Risikoeinschätzung ausgewählt und im Anschluss durchgeführt wird. Es ist somit ein Speicher vorhanden, dem sich entnehmen lässt, für welche Gefahrenquelle sich welches oder welche Verfahren zur Risikoeinschätzung eignen. Es kann hierbei für jede Gefahrenquelle keines, eines oder mehrere Risikoeinschätzungsverfahren als geeignet im Speicher angegeben sein.

Nach der Bestimmung des Risikos kann dieses mit einem Wert für ein tolerierbares Risiko verglichen werden und bei Überschreiten des Wertes wird das Verfahren zur Risikoreduktion durchgeführt. Hierbei handelt es sich um eine bevorzugte Möglichkeit, die Abhängigkeit der Durchführung des Risikoreduktionsverfahrens von dem bestimmten Risiko zu realisieren. Der Wert für ein tolerierbares Risiko stellt ein Maximalwert in dem Sinne dar, dass es sich um den schlechtmöglichsten Fall handelt, der keiner weiteren Behandlung bedarf. Er kann für verschiedene Gefahrenquellen der gleiche oder ein unterschiedlicher sein.

Vorzugsweise wird zur Durchführung des Verfahrens zur Risikoreduktion aus einem Speicher ein mit Bezug zu der Gefahrenquelle angegebenes Minderungsverfahren ausgewählt zur Verminderung des Ausmaßes und/oder der Wahrscheinlichkeit des Auftretens eines Schadens aufgrund der Gefahrenquelle, welches dann im Anschluss durchgeführt wird. Es ist somit ein Speicher vorhanden, dem sich entnehmen lässt, für welche Gefahrenquelle sich welches oder welche Verfahren zur Risikoreduktion eignen. Es kann hierbei für jede Gefahrenquelle keines, eines oder mehrere Risikoreduktionsverfahren als geeignet im Speicher angegeben sein.

Nach der Durchführung des Verfahrens zur Risikoreduktion kann erneut für die Gefahrenquelle ein hieraus resultierendes Risiko bestimmt werden, und abhängig von dem Ergebnis des bestimmten Risikos ein anderes Verfahren zur Risikoreduktion durchgeführt werden. Hierbei handelt es sich um ein iteratives Vorgehen, bei dem verschiedene Risikoreduktionsverfahren nacheinander angewandt werden. Es wird angestrebt, dies so oft durchzuführen, bis ein zufriedenstellendes oder angemessenes oder vertretbares Restrisiko erreicht ist.

Vorteilhafterweise kann nach Durchführung des Verfahrens zur Risikoreduktion geprüft werden, ob diese Durchführung sich negativ auf eine andere AI System spezifische Gefahrenquelle auswirken kann, und für diese andere Gefahrenquelle wird ein hieraus resultierendes Risiko bestimmt und abhängig von dem Ergebnis des bestimmten Risikos ein Verfahren zur Risikoreduktion hinsichtlich der anderen Gefahrenquelle durchgeführt. Dies adressiert die Wechselwirkung zwischen verschiedenen Gefahrenquellen, oder die Auswirkung eines Risikoreduktionsverfahrens einer ersten Gefahrenquelle auf eine zweite Gefahrenquelle.

Die Schritte können für einen einzelnen, mehrere oder vorzugsweise jeden Abschnitt innerhalb des Lebenszyklus des AI Systems durchgeführt werden. Auf diese Weise kann Abschnitt für Abschnitt eine Analyse und Risikobehandlung der einschlägigen Gefahrenquellen durchgeführt werden, um daraufhin ein qualitativ hochwertiges AI System vorliegen zu haben.

Zur Untersuchung der Relevanz der AI System spezifischen Gefahrenquellen kann auf einen Speicher zugegriffen werden, welcher eine Angabe einer Mehrzahl von AI System spezifischen Gefahrenquellen enthält. Dieser Speicher kann - z.B. in Form einer Liste - eine Vielzahl von in der Fachwelt bekannten AI System spezifischen Gefahrenquellen enthalten. Diese Menge der AI System spezifischen Gefahrenquellen kann bei Bedarf um weitere AI System spezifische Gefahrenquellen ergänzt werden, und/oder es können Gefahrenquellen gelöscht werden, z.B. weil sie mittlerweile üblicherweise nicht mehr zu Schäden führen.

Nach der Untersuchung der Relevanz der AI System spezifischen Gefahrenquellen kann ein Relevanzspeicher befüllt werden mit Angabe derjenigen AI System spezifischen Gefahrenquellen, die für die bestimmte AI Applikation und den bestimmten Abschnitt innerhalb des Lebenszyklus des AI Systems relevant sind. Wird der oben erläuterte Speicher, welcher eine Angabe einer Mehrzahl von AI System spezifischen Gefahrenquellen enthält, verwendet, kann die Befüllung des Relevanzspeichers der Filterung der Inhalte dieses Speichers entsprechen; d.h. aus diesem Speicher wird eine Teilmenge der Gefahrenquellen in den Relevanzspeicher übernommen.

Das Verfahren kann für eine Mehrzahl von für die bestimmte AI Applikation und für den bestimmten Abschnitt innerhalb des Lebenszyklus des AI Systems als relevant erkannten Gefahrenquellen durchgeführt werden. Vorzugsweise werden auf diese Weise alle Gefahrenquellen behandelt, welche relevant sind für die bestimmte AI Applikation und für den bestimmten Abschnitt. Dies entspricht einer umfassenden Erhöhung der Sicherheit und Qualität des AI Systems für die bestimmte AI Applikation zumindest in Bezug auf den jeweiligen Abschnitt innerhalb des Lebenszyklus des AI Systems.

Nach Durchführung der Schritte für eine AI System spezifische Gefahrenquelle kann diese Gefahrenquelle aus dem Relevanzspeicher entfernt werden, und es werden die Schritte für eine weitere AI System spezifische Gefahrenquelle aus dem Relevanzspeicher durchgeführt. Es wird hierdurch iterativ vorgegangen, wobei Gefahrenquelle nach Gefahrenquelle abgearbeitet wird.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt ablaufen. Hierzu kommt eines oder mehrere miteinander zusammenwirkende Computerprogramme zum Einsatz. Werden mehrere Programme verwendet, so können diese gemeinsam auf einem Computer gespeichert und von diesem ausgeführt werden, oder auch auf verschiedenen Computern an verschiedenen Orten. Da dies funktional gleichbedeutend ist, wird vorliegend im Singular "das Computergrogramm" und "der Computer" formuliert.

Eine Vorrichtung oder ein System zur Datenverarbeitung eignet sich zur Durchführung der oben erläuterten Schritte. Gegebenenfalls verwendete Speicher können extern sein, so dass die Vorrichtung auf sie lesend und auch schreibend zugreifen kann, oder auch Bestandteil der Vorrichtung oder des Systems sein.

Im Folgenden wird die Erfindung anhand eines Ausführungsbeispiels näher erläutert. Dabei zeigen:
Figur 1: eine Architektur eines Sicherheitssystems für eine künstliche Intelligenz,
Figur 2: ein Ablaufdiagramm zur Sicherstellung von funktionaler AI-Qualität für ein AI System,
Figur 3: ein System zur Sicherstellung von funktionaler AI-Qualität für ein AI System.

Es wird eine AI Applikation betrachtet, welche ein AI System verwendet. Bei einer solchen AI Applikation kann es sich z.B. um ein Fahrerassistenzsystem oder eine andere Safety Anwendung für ein Auto handeln. Das AI System kann insbesondere auf einem neuronalen Netz basieren, welches mittels eines geeigneten Verfahrens zum Maschinenlernen trainiert werden kann. Zum ergänzenden Verständnis des Begriffes des AI Systems wird auf den derzeit diskutierten Entwurf einer EU Verordnung "Gesetz über künstliche Intelligenz" bzw. "Artifical Intelligence Act" verwiesen. Hier findet sich unter "Definitionen" folgendes:
'artificial intelligence system' (AI system) means a system that is designed to operate with a certain level of autonomy and that, based on machine and/or human-provided data and inputs, infers how to achieve a given set of human-defined objectives using machine learning and/or logic- and knowledgebased approaches, and produces system-generated outputs such as content (generative AI systems), predictions, recommendations or decisions, influencing the environments with which the AI system interacts;
(Quelle: Proposal for a Regulation of the European Parliament and of the Council laying down harmonised rules on artificial intelligence (Artificial Intelligence Act) and amending certain Union legislative acts, Second Presidency compromise text vom 15.7.2022),
auf Deutsch: Ein 'artificial intelligence system' (AI System) bedeutet ein System, welches konzipiert wurde, um mit einem bestimmten Ausmaß an Autonomie zu operieren, und welches basierend auf von einer Maschine und/oder von Menschen zur Verfügung gestellten Daten und Inputs schließt, wie unter Verwendung von Maschinenlernen und/oder logik- und wissensbasiertem Vorgehen ein vorgegebener Satz von vom Menschen definierten Zielen erreicht werden kann, und welches systemgenerierte Outputs wie Inhalte (generative AI Systeme), Vorhersagen, Empfehlungen oder Entscheidungen hervorbringt, und die Umgebung, mit welcher das AI System interagiert, beeinflusst;
Bevor die AI Applikation mit dem AI System zum Einsatz kommen kann, soll eine systematische Behandlung von AI-basierten Gefährdungen erfolgen. Mittels einer im Folgenden näher erläuterten Systematik soll die Entwicklung von AI Systemen mit hoher funktionaler Qualität unterstützt werden. Diese technische Lösung zur Behandlung von AI-basierten Gefährdungen arbeitet auf AI System Ebene, betrachtet vordergründig also nicht die gesamte AI Applikation. Hierbei wird systematisch sichergestellt, dass eine angemessen niedrige Höhe für ein verbleibendes Restrisiko erreicht wird.

Ein KI-basierte Gefährdung entspricht einer Gefahrenquelle (englisch: hazard). Eine Gefahrenquelle kann die mögliche Ursache eines hieraus resultierenden Schadens (englisch: harm) sein. Das mit der Gefahrenquelle verbundene Risiko ist eine Kombination aus dem Ausmaß des Schadens und der Wahrscheinlichkeit des Eintretens dieses Schadens. Grundsätzlich ist für jede Gefahrenquelle anzustreben, ein tolerierbares Restrisiko zu erreichen.

Ein Grundgedanke des Vorgehens ist es, möglichst umfassend die Ursachen für Schäden zu betrachten, die die Charakteristiken des betrachteten AI Systems mit sich bringen. Es werden also möglichst alle Gefahrenquellen, welche spezifisch für das jeweils betrachtete AI System sind, berücksichtigt und versucht, deren negative Auswirkungen zu reduzieren. Auch Wechselwirkungen zwischen verschiedenen Gefahrenquellen finden Beachtung.

Die Gefahrenquellen werden hierbei systematisch entlang des Lebenszyklus des AI Systems betrachtet. Die Erstellung und Verwendung eines AI Systems lässt sich nämlich in mehrere Abschnitte eines Lebenszyklus (englisch: life cycle) gliedern. Jedes AI System, was von einem Anbieter auf den Markt gebracht wird, durchläuft verschiedene Stadien, welche man im "AI life cycle" zusammenfasst. Beispielsweise kann man die folgenden fünf Abschnitte definieren:
- Scoping: Analyse der AI Applikation, für welche das AI System verwendet werden soll, und der daraus sich ergebenden Anforderungen an das AI System
- Erstellung und Entwicklung der Trainingsdaten
- Erstellung und Training des Modells
- Testen und Verifizieren des AI Systems,
- Deployment bzw. Einbetten des AI Systems in die AI Applikation und Beobachtung des Verhaltens der AI Applikation im Betrieb.

Abhängig davon, welcher Lebensabschnitt eines AI Systems betrachtet wird, können verschiedene AI Gefahrenquellen relevant sein.

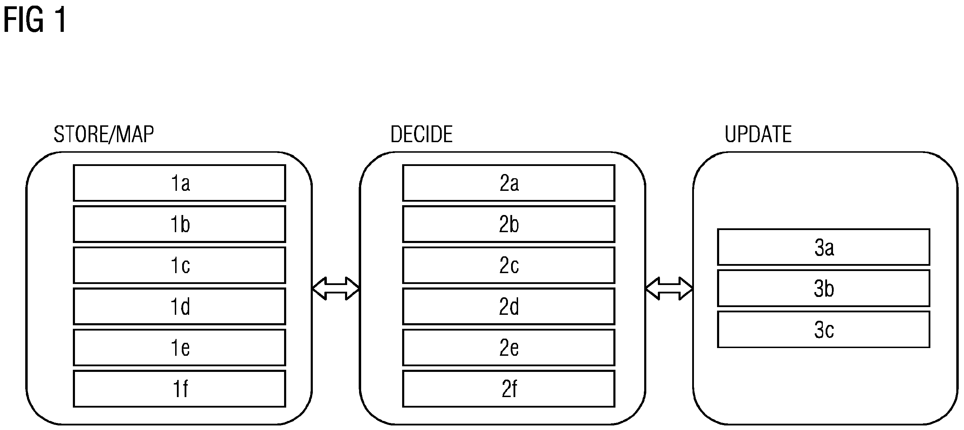

Anhand von Figur 1 wird die Architektur eines Sicherheitssystems erläutert, welches dieser systematischen Behandlung von AI-basierten Gefährdungen eines AI Systems dient. Hierbei zeigen die nummerierten Bezugszeichen nicht zwingend eine Reihenfolge von durchzuführenden Schritten an. Der linke Block STORE/MAP enthält Komponenten, welche primär der Speicherung und dem Zur-Verfügung-Stellen von wichtigen Daten und Informationen dienen. Hierbei handelt es sich um:

### 1a: Speicher für AI Gefahrenquellen

Hierin befindet sich eine Liste mit allen zu berücksichtigenden AI Gefahrenquellen. Beispiele für derartige AI Gefahrenquellen sind die Überanpassung (englisch: Overfitting), die Opazität (englisch: opaqueness), die fehlende Robustheit (englisch: lack of robustness), die Stichprobenverzerrung (englisch: selection bias), and das reward hacking. Es wird davon ausgegangen, dass diese an sich bekannt und daher nicht näher erläutert werden müssen.

### 1b: Sammlung von AI Gefahrenquellen

Hierin enthalten ist eine Unterliste mit AI Gefahrenquellen aus dem Speicher 1a für AI Gefahrenquellen, wobei diese Unterliste zu einem bestimmten Lebensabschnitt des AI Systems gehört. Denn üblicherweise spielen nicht alle AI Gefahrenquellen für jeden Lebensabschnitts des AI Systems eine Rolle. Wie diese Sammlung von AI Gefahrenquellen aus dem Speicher 1a für AI Gefahrenquellen zusammengestellt wird, wird später beschrieben.

### 1c: AI Risikoeinschätzung

Diese Komponente enthält Informationen über geeignete Verfahren zur Risikoeinschätzung (englisch: risk estimation) für jede Gefahrenquelle des Speichers 1a für AI Gefahrenquellen. Es wird davon ausgegangen, dass für jede AI Gefahrenquelle aus dem Speicher 1a für AI Gefahrenquellen zumindest ein derartiges Verfahren zur Risikoeinschätzung bekannt und in der Komponente 1c hinterlegt ist.

### 1d: AI Risikobewertung

Diese Komponente enthält Informationen über geeignete Verfahren zur Risikobewertung (englisch: risk evaluation) für jede Gefahrenquelle des Speichers 1a für AI Gefahrenquellen. Es wird davon ausgegangen, dass für jede AI Gefahrenquelle aus dem Speicher 1a für AI Gefahrenquellen zumindest ein derartiges Verfahren zur Risikobewertung bekannt und in der Komponente 1d hinterlegt ist.

### 1e: AI Risikominderung

Diese Komponente enthält Informationen über geeignete Verfahren zur Risikominderung (englisch: risk mitigation oder risk reduction) für jede Gefahrenquelle des Speichers 1a für AI Gefahrenquellen. Es wird davon ausgegangen, dass für jede AI Gefahrenquelle aus dem Speicher 1a für AI Gefahrenquellen zumindest ein derartiges Verfahren zur Risikominderung bekannt und in der Komponente 1e hinterlegt ist.

1f: Wechselwirkende negative Effekte von Gefahrenquellen Diese Komponente enthält Informationen über mögliche Wechselwirkungen zwischen Gefahrenquelle des Speichers 1a für AI Gefahrenquellen. Ferner sind auch Informationen über jeweils betroffene Verfahren zur Risikominderung enthalten. Denn die Anwendung einer Minderungsmethode hinsichtlich einer ersten Gefahrenquelle kann negative Effekte auf die Auswirkung einer zweiten Gefahrenquelle haben.

Eine Wechselwirkung zwischen verschiedenen Gefahrenquellen ist also insofern relevant, als möglicherweise der Versuch, eine erste Gefahrenquelle mit einem Verfahren zur Risikominderung zu behandeln, zur Verschlechterung der Situation hinsichtlich einer anderen Gefahrenquelle führen kann. Betrachtet sei beispielsweise die Gefahrenquelle des "Concept drift", welche dadurch entschärft werden kann, dass kontinuierliches Training des Modells auch nach dem Deployment durchgeführt wird. Dieses kontinuierliche Lernen kann jedoch zu einer höheren Anfälligkeit hinsichtlich der Gefahrenquelle des "data poisoning" führen, welche unerwünschte Manipulation von Trainingsdaten durch Dritte adressiert.

Der mittlere Block DECIDE enthält Komponenten, welche der Entscheidungsfindung basierend auf Informationen des linken Blocks STORE/MAP dienen. Hierbei handelt es sich um:

### 2a: Filter für den AI Lebensabschnitt

Diese Komponente erstellt basierend auf der vollständigen Liste der Gefahrenquellen des Speichers 1a für jeden Lebensabschnitt die Sammlung 1b von AI Gefahrenquellen.

### 2b: Filter für den AI Kontext

Für jede Gefahrenquelle der Sammlung 1b von AI Gefahrenquellen entscheidet diese Komponente, ob die jeweilige Gefahrenquelle für die betrachtete AI Applikation einschlägig ist. Hierzu werden relevante Informationen betreffend die AI Applikation verwendet, die über die Kommunikationsschnittstelle 3b zur Verfügung gestellt werden.

### 2c: AI Risikoeinschätzer

Für die jeweils betrachtete Gefahrenquelle sucht diese Komponente ein geeignetes Verfahren zur Risikoeinschätzung der Komponente AI Risikoeinschätzung 1c aus und führt dieses durch.

### 2d: AI Risikobewerter

Für die jeweils betrachtete Gefahrenquelle sucht diese Komponente ein geeignetes Verfahren zur Risikobewertung der Komponente AI Risikobewertung 1d aus und führt dieses durch.

### 2e: AI Risikominderer

Für die jeweils betrachtete Gefahrenquelle sucht diese Komponente ein geeignetes Verfahren zur Risikominderung der Komponente AI Risikominderung 1e aus und führt dieses durch.

2f: Detektion von wechselwirkenden Gefahrenquellen Für die jeweils betrachtete Gefahrenquelle bestimmt diese Komponente basierend auf den Informationen über mögliche Wechselwirkungen zwischen Gefahrenquelle der Komponente 1f diejenigen Gefahrenquellen, welche möglicherweise mit der jeweils betrachteten Gefahrenquelle wechselwirken.

Der rechte Block UPDATE enthält drei Komponenten, welche unterschiedlichen Zielen dienen. Hierbei handelt es sich um:

### 3a: Dokumentation

Um größtmögliche Transparenz und Nachverfolgbarkeit des Vorgehens zu gewährleisten, wird durch diese Komponente jeder durchgeführte Schritt dokumentiert.

### 3b: Kommunikationsschnittstelle

Diese Komponente kann genutzt werden, um mit Komponenten außerhalb des AI Systems zu kommunizieren. Auch können hierüber gezielt bestimmte Handlungen ausgelöst werden.

3c: Überarbeitung der Sammlung von AI Gefahrenquellen Wie im Folgenden anhand des Ablaufdiagramms erläutert wird, muss die Sammlung 1b von AI Gefahrenquellen regelmäßig überarbeitet werden, indem Gefahrenquellen hinzugefügt oder gelöscht werden. Diese Überarbeitung führt die Komponente 3c durch.

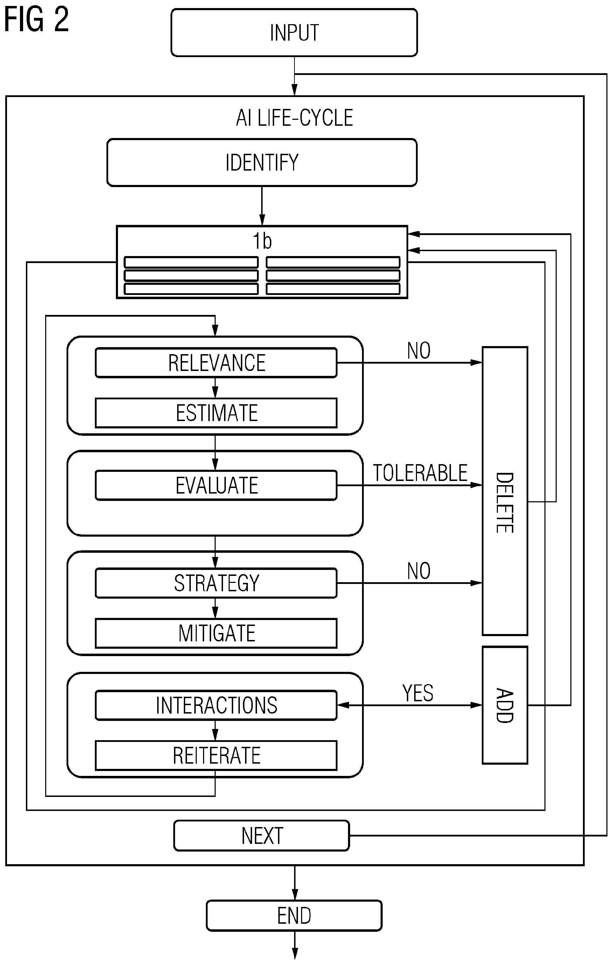

Anhand des Ablaufdiagramms der Figur 2 wird nun das Vorgehen erläutert. Im Schritt INPUT werden über die Kommunikationsschnittstelle 3b Informationen zur Verfügung gestellt über die AI Applikation, in welche das AI System eingebettet werden soll. Derartige Informationen werden vorzugsweise umfänglich von allen zukünftigen Nutzern der AI Applikation abgefragt, so dass sowohl die Art der beabsichtigten Nutzung als auch möglicher Missbrauch oder Fehlbedienung absehbar sind.

Die folgenden Schritte innerhalb des mit AI LIFE-CYCLE beschrifteten Kastens werden für jeden Lebensabschnitt des AI Systems durchgeführt. Hierbei wird jeder durchgeführte Schritt von der Komponente 3a dokumentiert, so dass eine nachvollziehbare Aufzeichnung über die durchgeführten Aktionen vorliegt.

Im Schritt IDENTIFY wird für den betrachteten Lebensabschnitt von dem Filter 2a die Sammlung 1b von AI Gefahrenquellen zusammengestellt. Hierbei wird also ermittelt, welche Gefahrenquellen für den betrachteten Lebensabschnitt potenziell relevant sein können und daher weiter zu untersuchen sind. Für jede Gefahrenquelle der resultierenden Sammlung 1b werden nun die Schritte durchgeführt, welche innerhalb des Kastens unterhalb der schematisch dargestellten Sammlung 1b angeordnet sind:
Im Schritt RELEVANCE wird mittels des Filters 2b für den AI Kontext festgestellt, ob die jeweilige Gefahrenquelle der Sammlung 1b für die betrachtete AI Applikation potenziell in einem Schaden resultieren kann. Falls dies nicht der Fall ist, entsprechend dem Pfeil NO, wird dies mittels der Komponente 3a dokumentiert, und die jeweilige Gefahrenquelle wird im Schritt DELETE mittels der Komponente 3c aus der Sammlung 1b gestrichen. Nun wird - entsprechend dem vom Schritte DELETE nach oben abgehenden Pfeil - die nächste Gefahrenquelle aus der Sammlung 1b betrachtet. Anderenfalls, d.h. wenn die jeweilige Gefahrenquelle als relevant anzusehen ist, wird im folgenden Schritt ESTIMATE mittels des AI Risikoeinschätzers 2c ein geeignetes Verfahren durchgeführt, um das Ausmaß des Risikos, welches mit der jeweiligen Gefahrenquelle einhergeht, zu schätzen.

Das im Schritt ESTIMATE erhaltene Risiko wird dann im Folgenden Schritt EVALUATE vom AI Risikobewerter 2d bewertet und mit einem Schwellenwert eines tolerierbaren Risikos verglichen. Wenn der Schwellenwert für das tolerierbare Risiko nicht überschritten ist, wird dies wieder mittels der Komponente 3a dokumentiert, und dem Pfeil TOLERABLE folgend wird die jeweilige Gefahrenquelle im Schritt DELETE mittels der Komponente 3c aus der Sammlung 1b gestrichen, wonach mit der nächsten Gefahrenquelle aus der Sammlung 1b fortgefahren wird.

Falls das festgestellte Risiko nicht tolerierbar ist, wird im Schritt STRATEGY mittels des AI Risikominderers 2e ermittelt, ob geeignete Verfahren zur Risikominderung verfügbar sind. Falls dies nicht der Fall ist, wird dies mittels der Komponente zur Dokumentation 3a dokumentiert; hierin können z.B. Empfehlungen für eine anderweitig durchzuführende Problembehandlung enthalten sein. Außerdem wird gemäß dem Pfeil NO die jeweilige Gefahrenquelle im Schritt DELETE mittels der Komponente 3c aus der Sammlung 1b gestrichen und die nächste Gefahrenquelle aus der Sammlung 1b betrachtet. Andererseits, falls im Schritt STRATEGY ein geeignetes Verfahren zur Risikominderung als verfügbar erkannt wurde, wird dieses im Schritt MITIGATE mittels des AI Risikominderers 2e angewandt.

Im Anschluss wird untersucht, ob die Risikominderung der betrachteten Gefahrenquelle eine negative Auswirkung auf andere Gefahrenquellen haben könnte. Mittels der Komponente 2f wird im Schritt INTERACTIONS geprüft, ob eine Wechselwirkung zwischen der betrachteten Gefahrenquelle und anderen Gefahrenquellen existiert. Ist dies der Fall, entsprechend dem Pfeil YES, so wird im Schritt ADD die jeweilige(n) Gefahrenquelle(n) mittels der Komponente 3c zur Sammlung 1b hinzugefügt. Auf diese Weise wird sichergestellt, dass zusätzliche Risiken, welche aufgrund einer Auswirkung der durchgeführten Risikominderung auf andere Gefahrenquellen entstehen könnten, nicht unberücksichtigt bleiben.

Gemäß dem Schritt REITERATE wird nun mit der betrachteten Gefahrenquelle erneut bei dem Schritt ESTIMATE eingesetzt, um festzustellen, ob nach Durchführung des Verfahrens zur Risikominderung ein tolerierbares Restrisiko erreicht wurde. Ist dies nicht der Fall, werden die Iterationen fortgesetzt, bis sich ein solches tolerierbares Restrisiko eingestellt hat (Pfeil TOLERABLE), oder bis kein geeignetes Verfahren zur Risikominderung mehr zur Verfügung steht. Danach wird mit der nächsten Gefahrenquelle aus der Sammlung 1b fortgefahren.

Die beschriebenen Schritte werden für alle Gefahrenquelle aus der Sammlung 1b durchgeführt, so lange, bis alle Gefahrenquellen aus der Sammlung 1b gelöscht wurden. Der Abschluss der Aktionen für den jeweiligen Lebensabschnitt wird dokumentiert und im Schritt NEXT wird zum nächsten Lebensabschnitt übergegangen. Dieser Prozess wird für jeden Lebensabschnitt durchgeführt, so dass die Risikobehandlung so vollständig wie möglich und das verbleibende Restrisiko minimal ist.

Im Schritt END wird der Abschluss des Verfahrens dokumentiert. Die im Laufe des Verfahrens mittels der Komponente 3a erstellte Dokumentation kann nun über die Kommunikationsschnittstelle 3b an geeignete Empfänger gesendet werden, sowie auch der gegebenenfalls identifizierte Bedarf, weitere Maßnahmen durchzuführen.

Von besonderem Vorteil bei dem beschriebenen Prozess ist die systematische Vorgehensweise, welche sich an den verschiedenen Lebensabschnitten des AI Systems orientiert. Durch diese Orientierung an den Lebensabschnitten wird sichergestellt, dass keine Gefahrenquelle übersehen wird.

Im Folgenden wird ein konkretes Beispiel zur Anwendung der beschriebenen Vorgehensweise erläutert:
Es wird eine AI Applikation betrachtet, welche sich in einem Stromnetzschutzgerät befindet und zuverlässig Kurzschlüsse in einem Stromnetz erkennen und diese reporten soll. Hierzu wird als Kontrollsystem ein AI System eingesetzt, das auf einem neuronalen Netz basiert. Dieses AI System im Schutzgerät erhält in seiner Arbeitsumgebung, also im laufenden Betrieb, Messdaten in Form von Zeitreihen von Spannung und Stromstärke an verschiedenen Punkten im Stromnetz. Basierend auf den Messungen soll vom AI System erkannt oder vorhergesagt werden, wann es zu einem Kurzschluss im Netz kommen kann. Diese Information soll dann von der AI Applikation an einen technischen Experten kommuniziert werden.

Außer diesen Informationen über die AI Applikation stehen Angaben über das AI System zur Verfügung, z.B. in Form eines Fact Sheets, welches eine automatische Verarbeitung der Daten ermöglicht. Eine vereinfachte Darstellung eines solchen Fact Sheets kann so aussehen:
- AI Technologie:
   Machine Learning, genauer ein supervised Machine Learn-ing, genauer ein Deep neural network
- Datenquelle für die Trainingsdaten:
   durch Computer Simulation hergestelltes Daten und historische Daten von Signalen von Kurzschluss Ereignissen
- Performance Metrik zur Beurteilung des Modells:
   F1-Score

Der Speicher 1a für AI Gefahrenquellen enthält die folgenden AI Gefahrenquellen:
- Overfitting
- Lack of Robustness
- Underrepresentation of protectable groups of persons
- Concept drift

Zusätzlich ist hier auch die Information hinterlegt, in welchem Lebensabschnitt die jeweilige Gefahrenquelle einschlägig ist, nämlich:
- Overfitting - Erstellung und Training des Modells
- Lack of Robustness - Erstellung und Training des Modells
- Underrepresentation of protectable groups of persons - Erstellung und Entwicklung der Trainingsdaten
- Concept drift - post-deployment, d.h. Beobachtung des Verhaltens der AI Applikation im Betrieb.

In der Komponente 1c zur AI Risikoeinschätzung sind die folgenden Informationen hinterlegt:
- AI Gefahrenquelle "Overfitting": relevant für jede auf Machine Learning basierte Technologie
- AI Gefahrenquelle "Lack of Robustness": relevant für jede auf Machine Learning basierte Technologie
- AI Gefahrenquelle "Underrepresentation of protectable groups of persons": relevant für jede datengetriebenen AI Technologie, falls personenbezogene Daten verwendet werden
- AI Gefahrenquelle "Concept drift": relevant für jede auf Machine Learning basierte Technologie

In der Komponente 1e zur AI Risikominderung sind die Folgenden Informationen zu den Verfahren zur Risikominderung hinterlegt:
- Overfitting: Risikominderung mittels Data Augmentation; Risikominderung mittels Dropout, eignet sich nur für Deep Neural Networks
- Lack of Robustness: Risikominderung mittels Dropout, eignet sich nur für Deep Neural Networks
- Underrepresentation of protectable groups of persons: kein geeignetes Verfahren
- Concept drift: kein geeignetes Verfahren

In der Komponente 1f sind keine Wechselwirkung von Gefahrenquellen angegeben.

Es wird nun entlang dem Lebenszyklus des AI Systems für jede Phase die Behandlung der AI-basierten Gefährdungen des AI Systems durchgeführt:

### 1. Phase Scoping

Die Anwendung des Filters 2a für den AI Lebensabschnitt ergibt, dass in diesem Lebensabschnitt keine der oben genannten Gefahrenquellen eine Rolle spielen.

Es kann daher mit dem nächsten Lebensabschnitt fortgefahren werden.

### 2. Erstellung und Entwicklung der Trainingsdaten

Die Anwendung des Filters 2a für den AI Lebensabschnitt ergibt, dass in diesem Lebensabschnitt die Gefahrenquelle "Underrepresentation of protectable groups of persons" relevant sein kann.

Aus den Informationen der Komponente 1c zur AI Risikoeinschätzung lässt sich entnehmen, dass dies nur relevant ist, falls personenbezogene Daten verwendet werden. Da bei dem Stromnetzschutzgerät personenbezogene Daten keine Rolle spielen, kann die Gefahrenquelle aus der Liste 1b gelöscht und mit dem nächsten Lebensabschnitt fortgefahren werden.

### 3. Erstellung und Training des Modells

Die Anwendung des Filters 2a für den AI Lebensabschnittergibt, dass in diesem Lebensabschnitt die Gefahrenquellen Overfitting und Lack of Robustness relevant sein können.

Behandlung der ersten Gefahrenquelle Overfitting:
Gemäß den Informationen der Komponente 1c zur AI Risikoeinschätzung ist diese Gefahrenquelle relevant für jede auf Maschinenlernen basierte Technologie. Gemäß dem Fact Sheet handelt es sich bei dem AI System um ein tiefes neuronales Netzwerk, was hierunter fällt. Daher ist Relevanz zu bejahen.

Um zu entscheiden, ob das Risiko tolerierbar ist, wird folgendermaßen vorgegangen: es wird ein Overfitting Score bestimmt, indem die Performanz bezüglich einer vorher festgelegten Performanz Metrik sowohl auf dem Trainingsdatensatz als auch auf einem Testdatensatz ausgewertet und anschließend zueinander in Relation gesetzt wird. Dieser overfitting score sei so groß, dass er zu einem Schaden, nämlich einer Fehlklassifikation, führen kann. Das entsprechende Risiko wird durch Schwellenwertvergleich als nicht tolerierbar eingestuft.

Daher wird ein Verfahren zur Risikominderung durchgeführt. Das Verfahren der Data Augmentation sei nicht anwendbar. Denn es kann sein, dass manche Möglichkeiten zur Minderung des Einflusses einer Gefahrenquelle nur in bestimmten Kontexten angewendet werden können. Dies soll aufzeigen, dass Data Augmentation, falls sinnvoll anwendbar, eine gute Methode zur Risikominderung ist, und daher in der Tabelle der Komponente 1e enthalten ist. Dennoch sollen die Risikominderungsmethoden, welche dort in Bezug auf eine bestimmte Gefahrenquelle aufgeführt sind, nicht grundsätzlich angewendet werden, ohne den Kontext zu beachten. Dieser kann ergeben, dass eine bestimmte Risikominderungsmethode in manchen Situationen nicht sinnvoll einsetzbar ist.

Daher wird das nächste Verfahren zur Risikominderung angewandt, nämlich die Regularisierung durch Einbeziehen von Dropouts in das Training.

Im Anschluss wird geprüft, ob aufgrund des Trainings mit Dropout Wechselwirkungen mit anderen Gefahrenquellen zu erwarten sind. Dies ist nicht der Fall.

Es erfolgt nun eine erneute Iteration der Schritte. Der neu berechnete Overfitting Score ist nun deutlich geringer, so dass das Risiko tolerierbar ist. Daher kann die Gefahrenquelle des Overfitting aus der Liste 1b gelöscht und mit der nächsten Gefahrenquelle des gleichen Lebensabschnitts fortgefahren werden.

Behandlung der zweiten Gefahrenquelle Lack of Robustness: Gemäß den Informationen der Komponente 1c zur AI Risikoeinschätzung ist diese Gefahrenquelle relevant für jede auf Maschinenlernen basierte Technologie. Gemäß dem Fact Sheet handelt es sich bei dem AI System um ein Deep neural network, was hierunter fällt. Daher ist Relevanz zu bejahen.

Um zu entscheiden, ob das Risiko tolerierbar ist, wird folgendermaßen vorgegangen: es wird ein Robustness Score bestimmt, indem ein Robustness Performance Test durchgeführt wird, z.B. ein durch Prüfen der Robustheit gegen feindliche Angriffe (englisch: adversarial attacks) oder gegen bestimmte Permutationen, wie z.B. z.B. reduzierte Schärfe von Bildern.

Zwar kann auch hier ein Schaden in Form einer Fehlklassifikation auftreten, jedoch ergibt der Schwellenwertvergleich, dass das hiermit verbundene Risiko tolerierbar ist.

Daher kann die Gefahrenquelle des Lack of Robustnes aus der Liste 1b gelöscht und mit dem nächsten Lebensabschnitt fortgefahren werden.

### 4. Testen und Verifizieren des AI Systems

Die Anwendung des Filters 2a für den AI Lebensabschnitt ergibt, dass in diesem Lebensabschnitt keine der oben genannten Gefahrenquellen eine Rolle spielen.

Es kann daher mit dem nächsten Lebensabschnitt fortgefahren werden.

### 5. Letzte Phase: Deployment und Post-Deployment

Die Anwendung des Filters 2a für den AI Lebensabschnitt ergibt, dass in diesem Lebensabschnitt die Gefahrenquelle "Concept Drift" relevant sein kann.

Diese Gefahrenquelle ist relevant, hierfür gelten die gleichen Ausführungen wie oben zu den Gefahrenquellen Overfitting und Lack of Robustness.

Um zu entscheiden, ob das Risiko tolerierbar ist, wird folgendermaßen vorgegangen: es wird die Performanz bezüglich einer vorher definierten Performanz Metrik bestimmt. Außerdem wird ein Ähnlichkeitsmaß zwischen der Verteilung der Daten auf dem Trainingsdatensatz und zughörigen, ursprünglichen Testdatensatz einerseits und einer aktuellen Verteilung von Daten in der Einsatzumgebung andererseits bestimmt. Diese zwei Kennzahlen können dann für die Entscheidung bzgl. der Risikoeinschätzung herangezogen werden.

Diese Auswertung ergibt, dass das Risiko nicht tolerierbar ist.

Ein Test auf das Vorhandensein von geeigneten Verfahren zur Risikominderung ergibt, dass kein geeignetes Verfahren verfügbar ist.

Über die erfolglose Problembehandlung der Gefahrenquelle des Concept Drift wird ein vorgegebener Kontakt informiert.

Die Gefahrenquelle wird im Anschluss aus der Liste 1b gelöscht. Da die Liste somit leer ist und keine weiteren Lebensabschnitte existieren, ist der Prozess somit beendet.

Führt man das systematisch das oben erläuterte Verfahren zur Verbesserung der funktionalen Qualität des AI Systems durch, so resultiert dies darin, dass ein AI System mit höherer Qualität bereitgestellt wird. Im konkreten Fall kann die Häufigkeit von Fehlalarmen, d.h. false positive Meldungen, verringert und Kurzschlüsse, d.h. true positive Meldungen, häufiger richtig detektiert werden.

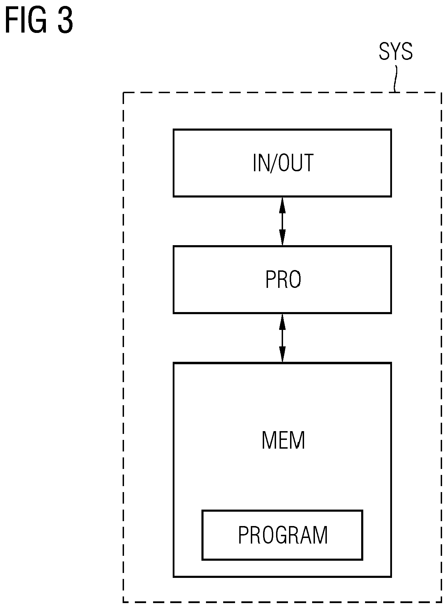

Der beschriebene Prozess läuft automatisiert ab. Hierzu kann das in Figur 3 dargestellte System zur Verbesserung von funktionaler AI-Qualität SYS zum Einsatz kommen, in welchem die Komponenten der Figur 1 implementiert sind. Während die im Folgenden näher erläuterten Bestandteile in der Figur einfach vorhanden sind, ist es auch möglich, dass diese in mehrfacher Ausführung vorhanden sind, z.B. als verteiltes System. Auf diese Weise kann die Funktionalität des Systems SYS auf mehrere, gegebenenfalls hierarchisch miteinander verknüpfte, Systeme aufgeteilt werden.

Das System SYS umfasst eine Recheneinheit bzw. einen Prozessor PRO. Dieser ist verbunden mit einem Speicher MEM, in welchem ein Computerprogramm PROGRAM abgelegt ist. Bei dem Speicher MEM handelt es sich vorzugsweise um ein nicht-flüchtiges computerlesbares Datenspeichermedium. Die Speicherung kann auf jegliche Weise erfolgen, welche geeignet ist, die Auslesbarkeit durch eine Recheneinheit zu gewährleisten, wie durch magnetische Speicherung, z.B. mittels Diskette, optische Speicherung, z.B. mittels CD, magneto-optische Speicherung, ROM (Read Only Memory) Speicherung, RAM (Random Access Memory) Speicherung, EPROM (Erasable Programmable Read-Only Memory), EEPROM (Electrically Erasable Programmable Read-Only Memory), Flash-Memory.

Durch Ausführen der Instruktionen des Programms PROGRAM in dem Prozessor PRO werden die Schritte der oben anhand der Figur 2 erläuterten Vorgehensweise durchgeführt. Hierzu ist der Prozessor PRO mit einer Ein- und Ausgabeeinheit IN/OUT verbunden, über welche Informationen zwischen dem System SYS und anderen Komponenten und/oder einem Nutzer ausgetauscht werden können. Diese Schnittstelle kann hierbei auf geeignete Weise ausgestaltet sein, z.B. über Funk oder über Kabel, und die Kommunikation kann über geeignete Standards erfolgen.

Trotz der Möglichkeit des vollständig automatisierten Ablaufs, ist ein menschlicher Eingriff an manchen Stellen denkbar:
- beim Schritt RELEVANCE, also der Frage, ob eine bestimmte Gefahrenquelle potentiell einen nicht zu vernachlässigenden Schaden bewirken könnte, kann es sinnvoll sein, das Ergebnis durch einen Menschen überprüfen zu lassen.
- bei der Auswahl der Verfahren zur Risikoeinschätzung,
- bewertung und -minderung kann es sinnvoll sein, einen Menschen prüfen zu lassen, ob das jeweils ausgewählte Verfahren, das am besten geeignete ist.
- auch die Festlegung von Schwellenwerten, deren Überschreiten ein Risiko als nicht tolerierbar erscheinen lässt, kann durch einen Menschen erfolgen.

Nach Durchlaufen des Prozesses kann das AI System für die beabsichtigte AI Applikation freigegeben werden. Diese Freigabe hat eine große Vertrauenswürdigkeit, denn einerseits wurden konkrete AI spezifische Gefahrenquellen identifiziert, bewertet und gemindert, und andererseits erfolgte dies unter Bezugnahme auf die konkrete AI Applikation.

Insbesondere kann davon ausgegangen werden, dass nach Inkrafttreten der bereits angesprochenen EU-Verordnung für viele AI Systeme das Absolvieren einer Konformitätsbewertung nachgewiesen werden muss. Zu diesen Zwecken kann der vorgestellte Prozess eingesetzt werden.

Die Entwicklung eines AI Systems kann auf mehrere Unternehmen verteilt stattfinden, so kann z.B. ein erstes Unternehmen die Anforderungen an das AI System aus der AI Applikation ableiten, ein zweites ein Modell erstellen und trainieren, und ein drittes das Deployment durchführen. In diesem Fall ist es möglich, dass der erläuterte Prozess entsprechend von verschiedenen Entitäten durchgeführt wird, z.B. indem jede Entität die zum jeweils verantworteten Lebensabschnitt gehörige Risikobehandlung durchführt.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird.

## Patentansprüche

1. Verfahren zur Erhöhung der Qualität eines AI Systems, bei dem
AI System spezifische Gefahrenquellen dahingehend untersucht werden,
ob sie für eine bestimmte AI Applikation relevant sind (RELAVANCE), und
ob sie für einen bestimmten Abschnitt innerhalb des Lebenszyklus des AI Systems relevant sind (IDENTFIY),
für eine als relevant für die bestimmte AI Applikation und den bestimmten Abschnitt erkannte Gefahrenquelle ein hieraus resultierendes Risiko bestimmt wird (ESTIMATE), abhängig von dem Ergebnis des bestimmten Risikos ein Verfahren zur Risikoreduktion hinsichtlich der Gefahrenquelle durchgeführt wird (MITIGATE).

2. Verfahren nach Anspruch 1, bei dem
das aus der Gefahrenquelle resultierende Risiko bestimmt wird, indem
aus einem Speicher (1d) ein mit Bezug zu der Gefahrenquelle angegebenes Verfahren zur Risikoeinschätzung ausgewählt und im Anschluss durchgeführt wird.

3. Verfahren nach einem der Ansprüche 1 bis 2, bei dem nach der Bestimmung des Risikos dieses mit einem Wert für ein tolerierbares Risiko verglichen wird und
bei Überschreiten des Wertes das Verfahren zur Risikoreduktion durchgeführt wird (MITIGATE).

4. Verfahren nach einem der Ansprüche 1 bis 3, bei dem zur Durchführung des Verfahrens zur Risikoreduktion (MITIGATE) aus einem Speicher (1e) ein mit Bezug zu der Gefahrenquelle angegebenes Minderungsverfahren ausgewählt wird zur Verminderung des Ausmaßes und/oder der Wahrscheinlichkeit des Auftretens eines Schadens aufgrund der Gefahrenquelle und im Anschluss durchgeführt wird.

5. Verfahren nach einem der Ansprüche 1 bis 4, bei demnach der Durchführung des Verfahrens zur Risikoreduktion (MITIGATE) erneut für die Gefahrenquelle ein hieraus resultierendes Risiko bestimmt wird (ESTIMATE), und abhängig von dem Ergebnis des bestimmten Risikos ein anderes Verfahren zur Risikoreduktion (MITIGATE) hinsichtlich der Gefahrenquelle durchgeführt wird.

6. Verfahren nach einem der Ansprüche 1 bis 5, bei dem nach Durchführung des Verfahrens zur Risikoreduktion (MITIGATE) geprüft wird (INTERACTIONS), ob diese Durchführung sich negativ auf eine andere AI System spezifische Gefahrenquelle auswirken kann, und
für diese andere Gefahrenquelle ein hieraus resultierendes Risiko bestimmt wird (ESTIMATE) und abhängig von dem Ergebnis des bestimmten Risikos ein Verfahren zur Risikoreduktion (MITIGATE) hinsichtlich der anderen Gefahrenquelle durchgeführt wird.

7. Verfahren nach einem der Ansprüche 1 bis 6, bei dem die Schritte für jeden Abschnitt innerhalb des Lebenszyklus des AI Systems durchgeführt werden.

8. Verfahren nach einem der Ansprüche 1 bis 7, bei dem zur Untersuchung der Relevanz der AI System spezifischen Gefahrenquellen auf einen Speicher (1a) zugegriffen wird, welcher eine Angabe einer Mehrzahl von AI System spezifischen Gefahrenquellen enthält.

9. Verfahren nach einem der Ansprüche 1 bis 8, bei dem nach der Untersuchung der Relevanz der AI System spezifischen Gefahrenquellen ein Relevanzspeicher (1b) befüllt wird mit Angabe derjenigen AI System spezifischen Gefahrenquellen, die für die bestimmte AI Applikation und den bestimmten Abschnitt innerhalb des Lebenszyklus des AI Systems relevant sind.

10. Verfahren nach einem der Ansprüche 1 bis 9, welches für eine Mehrzahl von für die bestimmte AI Applikation und für den bestimmten Abschnitt innerhalb des Lebenszyklus des AI Systems als relevant erkannten Gefahrenquellen durchgeführt wird.

11. Verfahren nach Anspruch 9 und 10, bei dem
nach Durchführung der Schritte für eine AI System spezifische Gefahrenquelle diese Gefahrenquelle aus dem Relevanzspeicher (1b) entfernt wird, und
die Schritte für eine weitere AI System spezifische Gefahrenquelle aus dem Relevanzspeicher (1b) durchgeführt werden.

12. Vorrichtung oder System zur Datenverarbeitung (SYS), umfassend Mittel zur Ausführung des Verfahrens nach einem der Ansprüche 1 bis 11.

13. Computerprogramm (PROGRAM), umfassend Befehle, die bei der Ausführung des Programms durch einen Computer diesen veranlassen, die Schritte des Verfahrens nach einem der Ansprüche 1 bis 11 auszuführen.

14. Computerlesbarer Datenträger, auf dem das Computerprogramm nach Anspruch 13 gespeichert ist.

15. Datenträgersignal, das das Computerprogramm nach Anspruch 13 überträgt.
